# FASCICULE DE BREVET EUROPEEN

(11) **EP 3 754 671 B1**
(45) Date de publication et mention de la délivrance du brevet: **06.04.2022**
(21) Numéro de dépôt: 20180902.7
(22) Date de dépôt: 18.06.2020
(51) Int. Cl.: H01B 7/295, H01B 3/02, H01B 3/48, H01B 13/22

(54) **PROCÉDÉ DE FABRICATION D'UN CÂBLE RÉSISTANT ET/OU RETARDANT AU FEU**
VERFAHREN ZUR HERSTELLUNG EINES FEUERBESTÄNDIGEN UND/ODER FEUERHEMMENDEN KABELS
METHOD FOR MANUFACTURING A FIRE RESISTANT AND/OR RETARDANT CABLE

(30) Priorité: 20.06.2019 FR 1906666
(43) Date de publication de la demande: 23.12.2020
(73) Titulaire: Nexans, 92400 Courbevoie (FR)
(72) Inventeur: GYPPAZ, Franck, 69003 LYON (FR); AUVRAY, Thierry, 69006 LYON (FR); ESTREBOOU, Nicolas, 69600 OULLINS (FR)
(74) Mandataire: Ipsilon

(56) Documents cités:
- WO-A1-90/11605
- FR-A1- 2 482 769
- US-A- 4 018 962
- US-A1- 2017 345 528
- US-A1- 2018 374 608

## Description

La présente invention concerne un procédé de fabrication d'un câble comprenant au moins un élément électriquement conducteur allongé et au moins une couche composite entourant ledit élément électriquement conducteur allongé, ladite couche composite étant obtenue à partir d'au moins une étape d'imprégnation d'un matériau fibreux non tissé par une composition géopolymère.

Elle s'applique typiquement mais non exclusivement à des câbles retardants et/ou résistants au feu destinés au transport d'énergie et/ou à la transmission de donnée tels que des câbles électriques et/ou optiques de sécurité retardants et/ou résistants au feu, notamment sans halogène, susceptibles de fonctionner pendant un laps de temps donné dans des conditions d'incendie sans être pour autant propagateur d'incendie, ni générateur de fumées importantes. Ces câbles de sécurité sont en particulier des câbles de transport d'énergie moyenne tension (notamment de 6 à 45-60 kV) ou des câbles de transmission basse fréquence, tels que des câbles de contrôle ou de signalisation.

De WO 2016/099200 est connu un procédé de fabrication d'un câble résistant au feu comprenant les étapes suivantes : une étape de préparation d'une composition géopolymère comprenant un silicate de sodium, de l'eau, de l'hydroxyde de potassium, un aluminosilicate, et des fibres de polypropylène ; une étape d'enroulement d'un ruban de papier non tissé autour d'un assemblage de conducteurs en cuivre, une étape d'imprégnation par trempage enduction de l'assemblage conducteurs en cuivre/ruban de papier non tissé, dans la composition géopolymère précédemment préparée, pour former une couche composite entourant les conducteurs en cuivre, puis une étape d'extrusion à chaud d'une gaine protectrice polymère. Le procédé est long, notamment de par l'étape de séchage, et ne peut être réalisé en continu. Par ailleurs, les éléments constitutifs du câble à proximité de la couche composite à base d'un matériau géopolymère peuvent être facilement contaminés par la composition géopolymère.

Le but de l'invention est par conséquent de pallier tout ou partie des inconvénients précités, et de fournir un procédé de fabrication d'un câble retardant au feu ledit procédé étant facile à mettre en œuvre, notamment facilement industrialisable, économique et rapide, et permettant de conduire à un câble présentant de bonnes propriétés mécaniques, notamment en termes de flexibilité et de durabilité.

L'invention a pour premier objet un procédé de fabrication d'un câble comprenant au moins un élément électriquement conducteur allongé et au moins une couche composite entourant ledit élément électriquement conducteur allongé, caractérisé en ce qu'il comprend au moins les étapes suivantes :
i) imprégner un matériau fibreux non tissé avec une composition géopolymère, afin de former un ruban imprégné de ladite composition géopolymère,
ii) sécher le ruban imprégné obtenu à l'étape i), afin de former un ruban imprégné séché, et
iii) appliquer le ruban imprégné séché obtenu à l'étape ii), autour d'un câble comprenant au moins un élément électriquement conducteur allongé, afin de former ladite couche composite entourant ledit élément électriquement conducteur allongé.

Le procédé de l'invention est rapide, facile à mettre en œuvre, notamment sur le plan industriel, économique, et il garantit l'obtention d'un câble résistant et/ou retardant au feu présentant de bonnes propriétés mécaniques, notamment en termes de flexibilité et de durabilité. Par ailleurs, le procédé de l'invention permet d'éviter la contamination des éléments constitutifs du câble à proximité de la couche composite par la composition géopolymère.

Dans l'étape i), le matériau fibreux non tissé se présente préférentiellement sous la forme d'un ruban ou d'une bande.

L'étape i) peut être effectuée manuellement ou de façon automatisée, et de préférence de façon automatisée.

L'étape i) est de préférence effectuée par enduction imprégnation, et de façon particulièrement préférée par enduction pré-contrôlée.

L'étape i) peut par exemple être effectuée à l'aide d'un dispositif d'enduction tel qu'une filière d'enduction.

L'étape i) est plus particulièrement mise en œuvre en faisant passer le matériau fibreux non tissé dans un dispositif d'enduction tel qu'une filière d'enduction, ledit dispositif étant alimenté avec la composition géopolymère, notamment à l'aide de moyens tels qu'une pompe. Cela permet ainsi de distribuer directement la quantité voulue de la composition géopolymère de façon homogène sur toute la largeur désirée dudit matériau.

L'étape i) peut en particulier être une enduction connue selon l'anglicisme « *tensioned web die coating* »*.*

Dans un mode de réalisation préféré de l'invention, l'étape i) d'imprégnation est réalisée à une température allant de 15°C à 90°C environ, et de façon particulièrement préférée de 20°C à 40°C environ.

L'étape ii) met en œuvre le séchage du ruban imprégné obtenu à l'étape i) précédente.

L'étape ii) peut être effectuée à une température d'au plus 120°C environ, et de préférence d'au plus 110°C environ. Une température d'au plus 120°C, et préférentiellement d'au plus 110°C peut permettre d'éviter le durcissement de la composition avant l'étape iii).

L'étape ii) peut être effectuée à une température d'au moins 50°C environ. Une température d'au moins 50°C peut permettre de favoriser un séchage rapide.

L'étape ii) est de préférence effectuée à une température allant de 70 à 115°C environ, et de façon particulièrement préférée allant de 90 à 107°C environ.

L'étape ii) permet d'amener la composition géopolymère d'un état liquide à un état semi-pâteux. Plus particulièrement, la composition géopolymère à l'issue de l'étape ii) comprend au moins une phase sous la forme d'un gel aluminosilicate.

L'étape ii) peut être effectuée à l'aide d'un ou plusieurs fours, notamment un ou plusieurs fours Infra Rouge.

L'étape iii) peut être mise en œuvre en appliquant le ruban imprégné séché soit directement autour d'un ou de plusieurs éléments conducteurs allongés, soit autour d'une couche interne dudit câble qui est elle-même autour d'un ou de plusieurs éléments conducteurs allongés.

L'étape iii) d'application du ruban imprégné séché autour d'un câble comprenant au moins un élément électriquement conducteur allongé peut être effectuée par enroulement du ruban imprégné séché autour du câble.

L'enroulement peut être longitudinal (i.e. selon l'axe longitudinal du câble ou en d'autres termes dans le sens de la longueur du câble) ou hélicoïdal, et de préférence longitudinal.

L'enroulement longitudinal peut en outre être effectué avec des zones de recouvrement, la ou les zones de recouvrement représentant de 10 à 20% environ.

L'étape iii) peut être effectuée manuellement ou de façon automatisée, et de préférence de façon automatisée.

L'étape iii) peut être mise en œuvre en faisant passer le ruban imprégné séché dans un dispositif de resserrement ou un dispositif de conformation de ruban (désigné également par les termes « trompette » ou « conformateur de ruban »). Le câble comprenant au moins un élément électriquement conducteur allongé passe également dans le dispositif de resserrement pendant l'étape iii). Ce dispositif est un dispositif mécanique qui enroule en continu le ruban imprégné séché autour de l'élément électriquement conducteur allongé. Cela permet ainsi de faciliter l'enroulement longitudinal du ruban imprégné autour du câble, et ainsi de former ladite couche composite entourant ledit élément électriquement conducteur allongé.

### Le matériau fibreux non tissé

Le matériau fibreux non tissé a de préférence une structure souple et flexible.

Le matériau fibreux non tissé peut être choisi parmi les matériaux cellulosiques, les matériaux à base de polymères organiques synthétiques, les fibres de verre, et un de leurs mélanges, et de préférence parmi les matériaux à base de polymères organiques synthétiques.

Les matériaux cellulosiques peuvent être choisis parmi le papier, en particulier le papier buvard ; les matériaux non tissés fabriqués à partir de cellulose fonctionnalisée ou non fonctionnalisée ; les matrices à structure alvéolaire et/ou fibreuse fabriquées à partir de fibres naturelles d'acétate de cellulose.

Les matériaux à base de polymères organiques synthétiques peuvent être choisis parmi les matériaux polymères à matrice poreuse et/ou fibreuse de polyoléfine(s), en particulier ceux choisis parmi les homo- et copolymères de propylène, les homo- et copolymères d'éthylène, les polyéthylènes haute densité (HDPE), les polyamides aromatiques (aramides), les polyesters, et un de leurs mélanges.

Selon une forme de réalisation préférée de l'invention, le matériau fibreux non tissé est un polyéthylène téréphtalate (PET).

Le matériau fibreux non tissé présente de préférence un grammage allant de 50 à 120 g/cm² environ. Cela permet ainsi d'obtenir une couche composite suffisamment flexible pour pouvoir être manipulée facilement, et suffisamment robuste pour obtenir une bonne protection au feu.

Selon une forme de réalisation préférée de l'invention, le matériau fibreux non tissé représente de 2 à 95% en poids environ, de façon particulièrement préférée de 5 à 45% en poids environ, et encore plus préférentiellement de 10 à 35% en poids environ, par rapport au poids total de la couche composite.

### La composition géopolymère

La composition géopolymère utilisée à l'étape i) est de préférence une composition géopolymère liquide.

La composition géopolymère de l'étape i) est de préférence une composition géopolymère aluminosilicate.

La composition géopolymère de l'invention est de façon particulièrement préférée une composition géopolymère comprenant de l'eau, du silicium (Si), de l'aluminium (Al), de l'oxygène (O), et au moins un élément choisi parmi le potassium (K), le sodium (Na), le lithium (Li), le césium (Cs), et le calcium (Ca), et de préférence choisi parmi le potassium (K) et le sodium (Na).

La composition géopolymère peut en particulier comprendre au moins un premier aluminosilicate, au moins un premier silicate alcalin, de l'eau, et éventuellement une base alcaline.

Dans l'invention, la composition géopolymère est une composition précurseur d'un géopolymère. En d'autres termes, elle comprend des ingrédients (premier aluminosilicate, au moins un premier silicate alcalin, de l'eau, et éventuellement une base alcaline ; ou premier métakaolin, deuxième métakaolin, premier silicate alcalin, eau, et éventuellement une base alcaline et/ou un deuxième silicate alcalin tels que définis ci-après) qui géopolymérisent ensemble (par polycondensation) pour former un géopolymère également dénommé matériau géopolymère tel que défini ci-après.

### Le premier aluminosilicate

Le premier aluminosilicate peut être choisi parmi les métakaolins (i.e. kaolins calcinés), les cendres volantes (bien connues sous l'anglicisme « *fly ash* »), le laitier de haut fourneau (bien connu sous l'anglicisme « *blast furnace slag* »), les argiles gonflantes telles que la bentonite, les argiles calcinées, tout type de composé comprenant de l'aluminium et de la fumée de silice, les zéolithes, et un de leurs mélanges.

Parmi ces composés, les métakaolins sont préférés, notamment ceux commercialisés par la société Imérys.

Dans l'invention, l'expression « métakaolin » signifie un kaolin calciné ou un aluminosilicate déhydroxylé. Il est de préférence obtenu par déshydratation d'un kaolin ou d'une kaolinite. Cette déshydratation est classiquement obtenue par calcination.

La composition géopolymère peut comprendre de 5 à 50% en poids environ d'aluminosilicate, et de préférence de 10 à 35% en poids environ d'aluminosilicate, par rapport au poids total de la composition géopolymère.

La composition géopolymère peut comprendre en outre un deuxième aluminosilicate différent du premier aluminosilicate.

De préférence, la composition géopolymère comprend deux kaolins calcinés ayant des températures de calcination différentes.

Selon une forme de réalisation particulièrement préférée de l'invention, la composition géopolymère comprend un premier métakaolin choisi parmi les kaolins calcinés à une température T_{c1} d'au moins 650°C environ, et un deuxième métakaolin choisi parmi les kaolins calcinés à une température T_{c2} telle que T_{c2} - T_{c1} ≥ 100°C environ, au moins un premier silicate alcalin, de l'eau, et éventuellement une base alcaline. La composition géopolymère peut alors présenter des propriétés mécaniques améliorées, notamment en termes de flexibilité et de durabilité, tout en garantissant de bonnes propriétés de réaction et de résistance au feu.

Le deuxième métakaolin étant choisi parmi les kaolins calcinés à une température T_{c2} telle que T_{c2} - T_{c1} ≥ 100°C environ, il est différent du premier métakaolin tel que défini dans l'invention.

Selon une forme de réalisation de l'invention, le premier métakaolin est un kaolin calciné à une température T_{c1} d'au moins 700°C environ, et de préférence d'au moins 725°C environ.

Selon une forme de réalisation préférée de l'invention, le premier métakaolin est un kaolin calciné à une température T_{c1} d'au plus 875°C environ, et de préférence d'au plus 825°C environ.

Le premier métakaolin peut comprendre au moins 20% en mole environ, et de préférence au moins 30% en mole environ d'oxyde d'aluminium (Al₂O₃), par rapport au nombre de moles total du premier métakaolin.

Le premier métakaolin peut comprendre au plus 60% en mole environ, et de préférence au plus 50% en mole environ d'oxyde d'aluminium (Al₂O₃), par rapport au nombre de moles total du premier métakaolin.

Le premier métakaolin peut comprendre au moins 35% en mole environ, et de préférence au moins 45% en mole environ d'oxyde de silicium (SiO₂), par rapport au nombre de moles total du premier métakaolin.

Le premier métakaolin peut comprendre au plus 75% en mole environ, et de préférence au plus 65% en mole environ d'oxyde de silicium (SiO₂), par rapport au nombre de moles total du premier métakaolin.

À titre d'exemples de premier métakaolin, on peut citer les métakaolins vendus par la société Imérys, notamment celui commercialisé sous la référence PoleStar^{®} 450.

Le premier métakaolin peut être choisi parmi les kaolins calcinés à T_{c1} telle que définie dans l'invention, pendant au moins 1 min environ, de préférence pendant au moins 10 min environ, de façon particulièrement préférée pendant une durée allant d'environ 30 min à 8h, et de façon plus particulièrement préférée pendant une durée allant d'environ 2h à 6h.

Le deuxième métakaolin est choisi de préférence parmi les kaolins calcinés à une température T_{c2} telle que T_{c2} - T_{c1} ≥ 150°C environ, de façon particulièrement préférée telle que T_{c2} - T_{c1} ≥ 200°C environ, et de façon plus particulièrement préférée telle que T_{c2} - T_{c1} ≥ 250°C environ.

Selon une forme de réalisation de l'invention, le deuxième métakaolin est un kaolin calciné à une température T_{c2} d'au moins 800°C environ, de préférence d'au moins 850°C environ, et de façon particulièrement préférée d'au moins 900°C environ.

Selon une forme de réalisation préférée de l'invention, le deuxième métakaolin est un kaolin calciné à une température T_{c2} d'au plus 1200°C environ, et de préférence d'au plus 1150°C environ.

Le deuxième métakaolin peut comprendre au moins 20% en mole environ, et de préférence au moins 30% en mole environ d'oxyde d'aluminium (Al₂O₃), par rapport au nombre de moles total du deuxième métakaolin.

Le deuxième métakaolin peut comprendre au plus 60% en mole environ, et de préférence au plus 50% en mole environ d'oxyde d'aluminium (Al₂O₃), par rapport au nombre de moles total du deuxième métakaolin.

Le deuxième métakaolin peut comprendre au moins 35% en mole environ, et de préférence au moins 45% en mole environ d'oxyde de silicium (SiO₂), par rapport au nombre de moles total du deuxième métakaolin.

Le deuxième métakaolin peut comprendre au plus 75% en mole environ, et de préférence au plus 65% en mole environ d'oxyde de silicium (SiO₂), par rapport au nombre de moles total du deuxième métakaolin.

À titre d'exemples de deuxième métakaolin, on peut citer les métakaolins vendus par la société Imérys, notamment celui commercialisé sous la référence PoleStar^{®} 200R.

Le deuxième métakaolin peut être choisi parmi les kaolins calcinés à T_{c2} telle que définie dans l'invention, pendant au moins 1 min environ, de préférence pendant au moins 5 min environ, de façon particulièrement préférée pendant une durée allant d'environ 10 min à 2h, et de façon plus particulièrement préférée pendant une durée allant d'environ 15 min à 1h.

Le rapport massique [premier métakaolin/deuxième métakaolin] dans la composition géopolymère va de préférence de 0,1 à 2 environ, de façon particulièrement préférée de 0,5 à 1,0 environ, et de façon plus particulièrement préférée est d'environ 1.

La composition géopolymère peut comprendre de 5 à 50% en poids environ, et de préférence de 10 à 35% en poids environ de premier et deuxième métakaolins, par rapport au poids total de la composition géopolymère.

Les premier et deuxième métakaolins peuvent être analysés par analyse thermique différentielle (ATD) [absence ou présence d'un point ou pic de cristallisation], résonance magnétique nucléaire (RMN) [spectre RMN²⁷ Al], et/ou diffraction aux rayons X (DRX).

Le premier métakaolin présente de préférence un pic de cristallisation par analyse thermique différentielle, de façon particulièrement préférée à une température allant de 900 à 1060°C, et de façon plus particulièrement préférée à une température allant de 950 à 1010°C.

Le deuxième métakaolin comprend de préférence de la mullite.

### Le premier silicate alcalin

Le premier silicate alcalin peut être choisi parmi les silicates de sodium, les silicates de potassium, et l'un de leurs mélanges.

Les silicates alcalins commercialisés par la société Silmaco ou par la société PQ corporation sont préférés. Le premier silicate alcalin est de préférence un silicate de sodium.

Le premier silicate alcalin peut avoir un rapport molaire SiO₂/M₂O allant de 1,1 à 35 environ, de préférence de 1,3 à 10 environ, et de façon particulièrement préférée de 1,4 à 5 environ, avec M étant un atome de sodium ou de potassium, et de préférence un atome de sodium.

La composition géopolymère peut comprendre de 5 à 60% en poids environ, et de préférence de 10 à 50% en poids environ de premier silicate alcalin, par rapport au poids total de la composition géopolymère.

### Le deuxième silicate alcalin

La composition géopolymère peut comprendre en outre un deuxième silicate alcalin différent du premier silicate alcalin.

Le deuxième silicate alcalin peut être choisi parmi les silicates de sodium, les silicates de potassium, et l'un de leurs mélanges. Les silicates alcalins commercialisés par la société Silmaco ou par la société PQ Corporation sont préférés. Le deuxième silicate alcalin est de préférence un silicate de sodium.

Les premier et deuxième silicates alcalins peuvent avoir respectivement des rapports molaires SiO₂/M₂O et SiO₂/M'₂O tels que M et M', identiques, sont choisis parmi un atome de sodium et un atome de potassium, et de préférence un atome de sodium, et lesdits rapports ont des valeurs différentes, de préférence des valeurs telles que leur différence est d'au moins 0,3, de façon particulièrement préférée telles que leur différence est d'au moins 0,5, et de façon plus particulièrement préférée telles que leur différence est d'au moins 1,0.

Selon une forme de réalisation de l'invention, la composition géopolymère comprend
- un premier silicate alcalin ayant un rapport molaire SiO₂/M₂O allant de 1,5 à 2,6 environ, et
- un deuxième silicate alcalin ayant un rapport molaire SiO₂/M'₂O supérieur à 2,6, de préférence allant de 2,8 à 4,5 environ, et de façon particulièrement préférée allant de 3,0 à 4,0 environ, étant entendu que M' est identique à M.

La composition géopolymère peut comprendre de 10 à 60% en poids environ, et de préférence de 20 à 50% en poids environ de premier et deuxième silicates alcalins, par rapport au poids total de la composition géopolymère.

Le rapport massique [premier silicate alcalin/deuxième silicate alcalin] dans la composition géopolymère va de préférence de 0,5 à 2,5, et de façon particulièrement préférée de 0,8 à 2,0.

### La base alcaline

La base alcaline peut être de l'hydroxyde de sodium, ou de l'hydroxyde de potassium, et de préférence de l'hydroxyde de sodium.

La composition géopolymère peut être exempte de base alcaline. Cela permet ainsi d'améliorer la manipulation de la composition géopolymère, en particulier lors de la préparation d'un câble.

Le rapport massique matières solides/eau dans ladite composition géopolymère détermine la cinétique de solidification lors des étapes i) à iii).

La composition géopolymère peut comprendre de 35% à 80% en poids environ, et de façon particulièrement préférée de 40% à 70% en poids environ, de matières solides (silicate alcalin(s), aluminosilicate(s) et base alcaline), par rapport au poids total de ladite composition géopolymère.

La composition géopolymère peut comprendre en outre un ou plusieurs additifs choisis parmi:
- un colorant,
- des fibres minérales, notamment choisies parmi les fibres d'alumine,
- un additif à structure polymère, notamment choisi parmi les fibres de polyoléfine telles que les fibres de polypropylène, de polyéthylène haute densité (HDPE), les aramides, et les fibres techniques de verre enduites de silicone ou d'un polymère organique de type polyéthylène ; un copolymère de styrène-butadiène (SBR) ; un copolymère de styrène-butadiène-éthylène (EBS) ; les dérivés des copolymères de styrène-éthylène, notamment ceux commercialisés par Kraton tels qu'un copolymère de styrène-éthylène-butylène-styrène (SEBS), un copolymère de styrène-butadiène-styrène (SBS), un copolymère de styrène-isoprène-styrène (SIS), un copolymère de styrène-propylène-éthylène (EPS) ou un copolymère de styrène-éthylène-propylène- styrène (SEPS) ; un copolymère d'éthylène et d'acétate de vinyle (EVA), un polyorganosiloxane réticulé (e.g. à l'aide d'un péroxyde) ; du polyéthylène éventuellement sous forme de poudre ; des lignosulfonates ; de l'acétate de cellulose ; d'autres dérivés de la cellulose ; une huile silicone de faible viscosité (e.g. de l'ordre de 12500 cPo) ; et une huile polyéthylène,
- un composé accélérant la prise en masse, notamment choisi parmi le sulfate d'aluminium, les aluns (e.g. sulfate double d'aluminium et de potassium), le chlorure de calcium, le sulfate de calcium, le sulfate de calcium hydraté, l'aluminate de sodium, le carbonate de sodium, le chlorure de sodium, le silicate de sodium, le sulfate de sodium, le chlorure de fer (III), et les lignosulfonates de sodium,
- un agent retardant la prise en masse, notamment choisi parmi l'ammonium, les métaux alcalins, les métaux alcalino-terreux, le borax, les lignosulfonates et en particulier les sels de métaux de lignosulfonates de calcium, les celluloses telles que la carboxyméthyl hydroéthyl cellulose, les lignines sulfoalkylées telles que par exemple la lignine sulfométhylée, les acides hydroxycarboxyliques, les copolymères de sels d'acide 2-acrylamido-2-méthylpropane sulfonique et d'acide acrylique ou d'acide maléique, et les sels saturés,
- une charge inerte, notamment choisi parmi le talc, les micas, les argiles déshydratées, et le carbonate de calcium,
- un amidon,
- un plastifiant de l'amidon, notamment choisi parmi un stéarate de métal, un polyéthylène glycol, un éthylène glycol, un polyol comme le glycérol, le sorbitol, le mannitol, le maltitol, le xylitol ou un oligomère de l'un de ces polyols, un sucrose comme le glucose ou le fructose, un plastifiant contenant des groupes amides, et tout type de plastifiant à base de polysaccharide(s) modifié(s),
- un dérivé de la cellulose,
- un matériau carboné expansé tel qu'un graphite expansé.

Le colorant est de préférence un colorant liquide à température ambiante (i.e. à 18-25°C).

La composition géopolymère peut comprendre au plus 15% en poids environ d'additif(s), de préférence au plus 8% en poids environ d'additif(s), et de façon particulièrement préférée au plus 5% en poids environ d'additif(s), par rapport au poids total de la composition géopolymère.

Selon une forme de réalisation particulièrement préférée de l'invention, la composition géopolymère comprend au plus 15% en poids environ d'additif(s) organique(s) tels que des polymère(s) organique(s), de préférence au plus 8% en poids environ d'additif(s) organique(s) tels que des polymère(s) organique(s), et de façon particulièrement préférée au plus 5% en poids environ d'additif(s) tels que des polymère(s) organique(s), par rapport au poids total de la composition géopolymère.

La composition géopolymère peut comprendre au moins 0,01% en poids environ d'additif(s), et de préférence au moins 0,5% en poids environ d'additif(s), par rapport au poids total de la composition géopolymère.

### La couche composite

La couche composite est de préférence une couche électriquement isolante.

Dans la présente invention, on entend par « couche électriquement isolante » une couche dont la conductivité électrique peut être d'au plus 1.10⁻⁹ S/m, et de préférence d'au plus 1.10⁻¹⁰ S/m (siemens par mètre) (à 25°C).

La couche composite est de préférence une couche retardante et/ou résistante au feu.

La couche composite présente de préférence une épaisseur allant de 0,2 à 3 mm environ, et de façon particulièrement préférée allant de 0,5 à 1 mm environ.

Lorsque l'épaisseur de la couche composite est inférieure à 0,2 mm, la protection thermique du câble obtenu selon le procédé de l'invention n'est pas suffisante.

La couche composite de l'invention est de préférence une couche rubanée (i.e. sous la forme d'un ruban ou d'une bande).

La couche composite présente de préférence une épaisseur sensiblement constante et constitue notamment une enveloppe de protection continue.

La couche composite peut en particulier comprendre 2 à 3 rubans superposés.

La couche composite de l'invention est de préférence non poreuse.

La couche composite est de préférence une couche interne dudit câble.

Selon l'invention, on entend par « couche interne », une couche qui ne constitue pas la couche la plus externe du câble.

La couche composite comprend de préférence au moins un matériau géopolymère et le matériau fibreux non tissé tel que défini dans l'invention.

### Le matériau géopolymère

Dans la présente invention, le matériau géopolymère est obtenu à partir d'une composition géopolymère telle que définie dans l'invention, de préférence par durcissement, géopolymérisation et/ou polycondensation de ladite composition géopolymère.

En particulier, la composition géopolymère telle que définie dans l'invention est apte à former ledit matériau géopolymère. Les ingrédients de la composition géopolymère peuvent donc subir une polycondensation pour former ledit matériau géopolymère. Le durcissement s'effectue par réaction interne du type polycondensation. Le durcissement n'est par exemple pas le résultat d'un simple séchage, comme c'est généralement le cas pour des liants à base de silicates alcalins.

En effet, les matériaux géopolymères résultent d'une réaction de polycondensation minérale par activation alcaline, dite géosynthèse, par opposition aux liants traditionnels hydrauliques dans lesquels le durcissement est le résultat d'une hydratation des aluminates de calcium et des silicates de calcium.

Dans la présente invention, l'expression « matériau géopolymère » signifie un matériau solide comprenant du silicium (Si), de l'aluminium (Al), de l'oxygène (O) et au moins un élément choisi parmi le potassium (K), le sodium (Na), le lithium (Li), le césium (Cs) et le calcium (Ca), et de préférence choisi parmi le potassium (K), et le sodium (Na).

Le matériau géopolymère peut être un matériau géopolymère aluminosilicate.

Le matériau géopolymère aluminosilicate peut être choisi parmi les poly(sialates) répondant à la formule (I) Mₙ(-Si-O-Al-O-)ₙ [(M)-PS] et ayant un rapport molaire Si/Al égal à 1, les poly(sialate-siloxos) répondant à la formule (II) Mₙ(-Si-O-Al-O-Si-O-)ₙ [(M)-PPS] et ayant un rapport molaire Si/Al égal à 2, les poly(sialate-disiloxos) répondant à la formule (III) Mₙ(-Si-O-Al-O-Si-O-Si-O)ₙ [(M)-PSDS] et ayant un rapport molaire Si/Al égal à 3, et d'autres poly(sialates) de rapport Si/Al > 3, les poly(sialates) précités comprenant un cation alcalin M choisi parmi K, Na, Li, Cs et l'un de leurs mélanges, et n désigne le degré de polymérisation.

Dans un mode de réalisation, le matériau géopolymère représente de 5 à 98% en poids environ, de préférence de 55 à 95% en poids environ, et de préférence encore de 65 à 90% en poids environ, par rapport au poids total de la couche composite.

Le procédé peut comprendre en outre avant l'étape i), une étape i₀) de préparation de la composition géopolymère comprenant le mélange dudit premier aluminosilicate avec ledit premier silicate alcalin, l'eau, et éventuellement la base alcaline.

L'étape i₀) est généralement effectuée à un pH élevé, notamment variant de 10 à 13.

L'étape i₀) comprend de préférence les sous-étapes suivantes :
i₀₁) une sous-étape de préparation d'une solution aqueuse du premier silicate alcalin, et
i₀₂) une sous-étape de mélange du premier aluminosilicate sous forme de poudre avec la solution aqueuse de silicate alcalin préparée à la sous-étape i₀₁) précédente.

La solution aqueuse du premier silicate alcalin peut être préparée en mélangeant du dioxyde de silicium SiO₂ ou un silicate alcalin avec une base MOH dans laquelle M est K ou Na.

Le dioxyde de silicium SiO₂ peut être choisi parmi la fumée de silice (i.e. silice pyrogénée), le quartz, et leurs mélanges.

La sous-étape i₀₁) peut être effectuée en dissolvant la base dans de l'eau, entraînant un dégagement de chaleur (réaction exothermique), puis en ajoutant la silice (ou le silicate alcalin). La chaleur dégagée accélère alors la dissolution de la silice (ou du silicate alcalin) lors de la sous-étape i₀₁), et du premier aluminosilicate lors de la sous-étape i₀₂).

Lorsque le deuxième aluminosilicate et/ou le deuxième silicate alcalin tel(s) que défini(s) dans l'invention existe(nt), l'étape i₀) de préparation de la composition géopolymère peut comprendre le mélange dudit premier aluminosilicate (de préférence sous forme de poudre) et éventuellement dudit deuxième aluminosilicate (de préférence sous forme de poudre), avec ledit premier silicate alcalin (de préférence en solution aqueuse), éventuellement ledit deuxième silicate alcalin (de préférence en solution aqueuse).

L'étape i₀) comprend de préférence le mélange des premier et deuxième métakaolins, avec le premier silicate alcalin et éventuellement le deuxième silicate alcalin, de l'eau, et éventuellement une base alcaline.

Les premier et deuxième métakaolins et les premier et deuxième silicates alcalins sont tels que définis dans l'invention.

Selon une forme de réalisation préférée, l'étape i₀) comprend les sous-étapes suivantes :
i₀ₐ) le mélange des premier et deuxième silicates alcalins (de préférence en solutions aqueuses), notamment sous agitation,
i_{0b}) éventuellement l'ajout d'une base alcaline, notamment en maintenant l'agitation, et
i_{0c}) l'ajout des premier et deuxième métakaolins (de préférence sous forme de poudres), notamment en maintenant l'agitation.

À l'issue de l'étape i₀), ou de la sous-étape i₀₂) ou i_{0c}), on obtient préférentiellement une solution fluide et homogène.

À l'issue de l'étape i₀), la composition géopolymère peut comprendre de 35% à 80% en poids environ, et de façon particulièrement préférée de 40% à 70% en poids environ, de matières solides (silicate alcalin(s), aluminosilicate(s) et base alcaline), par rapport au poids total de ladite composition géopolymère.

Un tel rapport massique permet d'avoir une composition géopolymère assez fluide pour permettre sa manipulation, et dont la cinétique de solidification est assez lente pour permettre la formation d'une couche de câble telle que définie ci-après.

Le rapport massique matières solides/eau dans ladite composition géopolymère peut permettre de déterminer la cinétique de solidification de ladite composition géopolymère.

Après l'étape i₀) de préparation de la composition géopolymère, et avant l'étape i) d'imprégnation, la composition géopolymère peut être chauffée, notamment à une température allant de 55°C à 95°C environ, et de façon particulièrement préférée de 70°C à 90°C environ. Cela permet ainsi de faciliter l'étape i).

Le procédé peut comprendre en outre après l'étape iii), une étape iv) d'application d'une gaine externe de protection autour de la couche composite. La gaine externe de protection peut permettre d'assurer l'intégrité mécanique du câble.

À l'issue de l'étape iv), le câble peut alors comprendre au moins un élément électriquement conducteur allongé, la couche composite entourant ledit élément électriquement conducteur allongé, et au moins une gaine externe de protection entourant ladite couche composite.

L'étape iv) est de préférence effectuée par extrusion, notamment à une température allant de 140°C à 195°C environ.

L'étape iv) peut être effectuée à l'aide d'une extrudeuse.

Dans ce mode de réalisation, une tête d'extrusion peut être positionnée à la sortie du dispositif de conformation tel que défini dans l'invention.

La gaine externe de protection est de préférence la couche la plus externe du câble.

La gaine externe de protection est de préférence une couche électriquement isolante.

La gaine externe de protection est de préférence réalisée en un matériau exempt d'halogène. Elle peut être réalisée classiquement à partir de matériaux retardant la propagation de la flamme ou résistant à la propagation de la flamme. Notamment, si ces derniers ne contiennent pas d'halogène, on parle de gainage de type HFFR (pour l'anglicisme « *Halogen Free Flame Retardant* »)*.*

La gaine externe de protection peut comprendre au moins un polymère organique ou inorganique.

Le choix du polymère organique ou inorganique n'est pas limitatif et ceux-ci sont bien connus de l'homme du métier.

Selon une forme de réalisation préférée de l'invention, le polymère organique ou inorganique est choisi parmi les polymères réticulés et non réticulés.

Le polymère organique ou inorganique peut être un homo- ou un co-polymère ayant des propriétés thermoplastiques et/ou élastomères.

Les polymères inorganiques peuvent être des polyorganosiloxanes.

Les polymères organiques peuvent être des polyuréthanes ou des polyoléfines.

Les polyoléfines peuvent être choisies parmi les polymères d'éthylène et de propylène. A titre d'exemple de polymères d'éthylène, on peut citer le polyéthylène linéaire basse densité (LLDPE), le polyéthylène basse densité (LDPE), le polyéthylène moyenne densité (MDPE), le polyéthylène haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR), les terpolymères d'éthylène et de propylène (EPT) tels que par exemple les terpolymères d'éthylène propylène diène monomère (EPDM) ou un de leurs mélanges.

Le polymère de la gaine externe de protection est de préférence un polymère organique, de préférence encore un polymère d'éthylène, et de préférence encore un copolymère d'éthylène et d'acétate de vinyle, un polyéthylène linéaire basse densité, ou un de leurs mélanges.

La gaine externe de protection peut comprendre en outre une charge minérale ignifugeante hydratée. Cette charge minérale ignifugeante hydratée agit principalement par voie physique en se décomposant de manière endothermique (e.g. libération d'eau), ce qui a pour conséquence d'abaisser la température de la gaine et de limiter la propagation des flammes le long du câble. On parle notamment de propriétés de retard à la flamme, bien connues sous l'anglicisme « *flame retardant* »*.*

La charge minérale ignifugeante hydratée peut être un hydroxyde métallique tel que l'hydroxyde de magnésium ou le trihydroxyde d'aluminium.

La gaine externe de protection peut comprendre en outre une charge inerte, notamment choisi parmi le talc, les micas, les argiles déshydratées et un de leurs mélanges.

Avantageusement, le câble obtenu selon un procédé conforme à l'invention satisfait à au moins une des normes de réaction ou non-propagation au feu choisies parmi les normes EN 60332-1, EN 60332-3, et EN 50399 (2012/02 + A1 2016) ; et de préférence à la norme EN 50399 (2012/02 + A1 2016), en particulier aux critères de classification B2ca, s1a, d0, a1 de ladite norme, et éventuellement aux normes EN 60332-1 et EN 60332-3.

Selon une forme de réalisation de l'invention, le câble est un câble d'énergie et/ou de télécommunication, et de préférence un câble électrique.

Lorsque le câble comprend une pluralité d'éléments électriquement conducteurs allongés, la couche composite peut alors entourer la pluralité d'éléments électriquement conducteurs allongés du câble.

Le câble peut comprendre une seule couche composite telle que définie dans l'invention ou une pluralité de couches composites telles que définies dans l'invention.

Lorsque le câble comprend une pluralité de couches composites, le procédé peut comprendre en outre la réitération des étapes i) à iii), autant de fois qu'il y a de couches composites à appliquer, puis éventuellement l'étape iv) telle que définie dans l'invention.

De préférence, le câble comprend une seule couche composite, et de façon plus particulièrement préférée une seule couche composite interne.

Selon une forme de réalisation de l'invention, le câble obtenu selon le procédé de l'invention comprend en outre un ou plusieurs couches interposées entre l'élément électriquement conducteur allongé et la couche composite telle que définie dans l'invention.

Ces couches peuvent comprendre une ou plusieurs couches polymères telles que des couches polymères électriquement isolantes, et/ou une ou plusieurs couches métalliques telles que des couches métalliques contenant une ou plusieurs ouvertures.

Dans ce cas, le procédé comprend en outre, avant l'étape i) ou avant l'étape iii), une ou plusieurs étapes d'application d'une ou plusieurs des couches mentionnées ci-dessus, autour de l'élément électriquement conducteur allongé, de l'ensemble des éléments électriquement conducteurs allongés, ou autour de chacun des éléments électriquement conducteurs allongés, selon le type de câble souhaité.

Les couches métalliques contenant une ou plusieurs ouvertures sont typiquement des couches utilisées dans des câbles rayonnants bien connus de l'homme du métier.

Selon une forme de réalisation préférée de l'invention, le câble comprend :
- une pluralité d'éléments électriquement conducteurs, chacun desdits éléments électriquement conducteurs étant entouré par une couche polymère, notamment électriquement isolante, pour former une pluralité d'éléments électriquement conducteurs isolés,
- une couche composite telle que définie dans l'invention entourant ladite pluralité d'éléments électriquement conducteurs isolés, et
- une gaine externe de protection, notamment électriquement isolante, entourant ladite couche composite.

Le procédé conforme à l'invention est de préférence un procédé continu. En d'autres termes, au moins les étapes i) à iii), et de préférence au moins les étapes i) à iv) sont effectuées en continu.

Dans l'invention, l'expression "procédé continu" signifie que le procédé est effectué sur une seule ligne de production, et/ou sans étapes de repos, de recueil, ou de récupération. En d'autres termes, dans le procédé conforme à l'invention, il n'y a pas d'étapes intermédiaires de repos entre la distribution du matériau fibreux non tissé, et la récupération/obtention du câble final. En d'autres termes également, les étapes i), ii), iii), et iv) si elle existe, sont concomitantes, i.e. les étapes i), ii), iii), et iv) si elle existe, sont mises en œuvre en même temps.

Selon ce mode de réalisation, le matériau fibreux non tissé peut être disposé sur un distributeur tel qu'un dérouleur ou dévidoir, et ledit matériau peut être distribué ou déroulé en continu pour mettre en œuvre au moins les étapes i) à iii) ou les étapes i) à iv).

De préférence, l'étape i) est mise en œuvre en faisant passer le matériau fibreux non tissé dans un dispositif d'enduction alimenté avec la composition géopolymère avec un débit D (en kg/min), le distributeur délivre le matériau fibreux non tissé à une vitesse V (en km/min), et le rapport D/V va d'environ 20 à 50 kg de composition géopolymère / km de matériau fibreux non tissé, et de façon particulièrement préférée d'environ 25 à 40 kg de composition géopolymère / km de matériau fibreux non tissé. La quantité de composition géopolymère appliquée sur le matériau fibreux non tissée peut ainsi être facilement contrôlée par une pompe.

La vitesse V est de préférence identique à la vitesse de défilement du câble.

Le débit D peut aller de 0,5 kg/min à 4,5 kg/min environ.

La vitesse V peut aller de 20 m/min à 150 m/min environ.

Selon une forme de réalisation particulièrement préférée de l'invention, le matériau fibreux non tissé passe dans le dispositif d'enduction pour mettre en œuvre l'étape i), puis le ruban imprégné obtenu passe dans un ou plusieurs fours, de préférence dans plusieurs fours disposés successivement l'un après l'autre pour mettre en œuvre l'étape ii), puis le ruban imprégné séché passe dans le dispositif de conformation du ruban au travers duquel un câble comprenant au moins un élément électriquement conducteur allongé défile, pour mettre en œuvre l'étape iii), et enfin le câble obtenu passe dans une tête d'extrudeuse, afin de mettre en œuvre l'étape iv).

Lors de l'étape ii), la transformation de l'état liquide à l'état pâteux demande une quantité importante d'énergie. L'utilisation de plusieurs fours permet d'optimiser le séchage du ruban imprégné (en termes de temps d'exposition, vitesse V et quantité d'énergie délivrée).

Le procédé conforme à l'invention est rapide, simple et avantageux d'un point de vue économique. Il permet de fabriquer en peu d'étapes un câble présentant de bonnes propriétés mécaniques, notamment en termes de flexibilité et de durabilité, tout en garantissant une bonne performance de résistance au feu.

L'invention sera mieux comprise, et d'autres buts, détails, caractéristiques et avantages de celle-ci apparaîtront plus clairement au cours de la description suivante de modes de réalisation particuliers de l'invention, donnés uniquement à titre illustratif et non limitatif, en référence aux figures annexées.

### EXEMPLES

Les dessins annexés illustrent l'invention :
La figure 1 représente une vue schématique d'un câble électrique tel qu'obtenu selon le procédé conforme à l'invention.
La figure 2 représente une vue schématique du procédé conforme à l'invention.

Pour des raisons de clarté, seuls les éléments essentiels pour la compréhension de l'invention ont été représentés de manière schématique sur ces figures, et ceci sans respect de l'échelle.

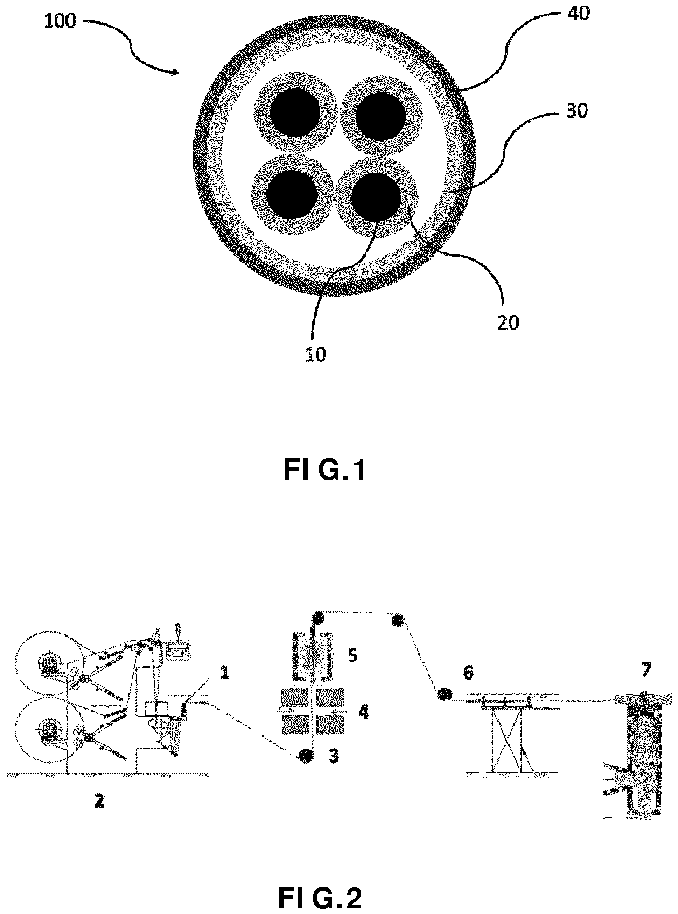

Le câble électrique 100, illustré sur la figure 1, correspond à un câble électrique résistant au feu de type K25 ou RZ1K.

Ce câble électrique 100 comprend quatre éléments électriquement conducteurs allongés 10, chacun étant isolé avec une couche électriquement isolante 20, et, successivement et coaxialement autour de ces quatre éléments électriquement conducteurs allongés isolés (10, 20), une couche composite 30 telle que définie dans l'invention entourant les quatre éléments électriquement conducteurs allongés isolés (10, 20), et une gaine externe 40 de type HFFR entourant la couche composite 30 telle que définie dans l'invention, et se présente avantageusement sous la forme d'un ruban.

Sur la figure 2, est illustrée une vue schématique du procédé conforme à l'invention mis en œuvre de façon continue. En particulier, un matériau fibreux non tissé **1** sous la forme d'un ruban est placé sur un enrouleur **2**, déroulé et amené jusqu'à une filière d'enduction **3** alimentée avec une composition géopolymère **4**, afin de permettre l'imprégnation du matériau fibreux non tissé **1** par ladite composition géopolymère [étape i)]. Puis, le ruban imprégné est ensuite amené vers un four **5**, afin de permettre son séchage [étape ii)]. Le ruban imprégné séché est ensuite amené dans un dispositif de resserrement **6** au travers duquel un câble comprenant au moins un élément électriquement conducteur allongé défile, afin de permettre l'enroulement longitudinal du ruban imprégné séché autour du câble, et ainsi de former ladite couche composite entourant ledit élément électriquement conducteur allongé [étape iii)], et enfin le câble obtenu passe au travers d'une tête d'extrusion **7** pour former la gaine externe de protection [étape iv)].

Les exemples suivants permettent d'illustrer la présente invention. Ils n'ont pas de caractère limitatif sur la portée globale de l'invention telle que présentée dans les revendications.

Les matières premières utilisées dans les exemples, sont listées ci-après :
- solution aqueuse d'un premier silicate de sodium à 50% en poids environ de type « *waterglass* », Simalco, silicate de sodium de rapport molaire SiO₂/Na₂O de 2,0 environ,
- solution aqueuse d'un deuxième silicate de sodium à 38% en poids environ de type « *waterglass* », Simalco, silicate de sodium de rapport molaire SiO₂/Na₂O de 3,4 environ,
- premier métakaolin, PoleStar^{®} 450, Imerys, de rapport molaire Al₂O₃/SiO₂ de 41/55 (i.e. de 0,745 environ), kaolin calciné à une température de 700°C environ,
- deuxième métakaolin, PoleStar^{®} 200R, Imerys, de rapport molaire Al₂O₃/SiO₂ de 41/55 (i.e. de 0,745 environ), kaolin calciné à une température de 1000°C environ, et
- matériau non tissé en Polyester, GT320, GECA TAPES.

Sauf indications contraires, toutes ces matières premières ont été utilisées telles que reçues des fabricants.

### Exemple 1 : préparation d'un câble résistant au feu selon un procédé conforme à l'invention

Une composition géopolymère a été préparée de la façon suivante : une solution aqueuse de silicates alcalins a été préparée en mélangeant 40 g d'une solution aqueuse à 50% en poids d'un premier silicate de sodium et 40 g d'une solution aqueuse à 38% en poids d'un deuxième silicate de sodium. Puis, 10 g d'un premier métakaolin et 10 g d'un deuxième métakaolin ont été mélangés avec la solution aqueuse de silicates alcalins. Ladite composition géopolymère comprend 55,2% en poids environ de matières solides, par rapport au poids total de ladite composition géopolymère.

Un matériau fibreux non tissé en polyester sous la forme d'un ruban est placé sur un enrouleur, déroulé à une vitesse de 50 m/min environ, et amené jusqu'à une filière d'enduction alimenté avec ladite composition géopolymère avec un débit de 1,25 kg/min, afin de permettre l'imprégnation du matériau fibreux non tissé par la composition géopolymère. La composition géopolymère a une température de 40°C environ.

Le ruban imprégné est ensuite amené vers un premier four IR fonctionnant à une température de 800°C, puis un deuxième four IR fonctionnant à une température de 800°C, et enfin vers un troisième four IR fonctionnant à une température de 800°C, afin de permettre le séchage du ruban imprégné.

Le ruban imprégné séché est ensuite amené dans un dispositif de resserrement au travers duquel un câble basse tension défile, afin de permettre l'enroulement longitudinal du ruban imprégné autour du câble. Le câble comprend 5 conducteurs en cuivre de section 1,5 mm², chacun des conducteurs étant entouré avec une couche électriquement isolante à base de XLPE. À l'issue de l'étape d'application du ruban imprégné autour du câble, une couche composite entourant les conducteurs isolés est obtenue.

La couche composite formée a une épaisseur de 0,5 mm.

L'assemblage obtenu est ensuite recouvert par extrusion à chaud d'une gaine protectrice polymère à base d'un mélange HFFR produit par NEXANS à base de polyéthylène et de charges ignifugeantes, ladite gaine ayant une épaisseur de 2 mm environ. On a ainsi obtenu un câble conforme à l'invention. Les performances à la flamme du câble sont déterminées suivant la norme EN50399. 15 tronçons de câble positionnés sur une échelle verticale sont exposés à une flamme 20kW de puissance pendant 20 min.

Les résultats sont reportés dans le tableau 1 ci-dessous :

**TABLEAU 1**

| **Paramètres de performances** | **Valeurs** | **Classe selon EN50399** |
|---|---|---|
| pHRR (kW) | 13,8 | B2 |
| Temps au pic HRR (s) | 912 | |
| THR (MJ) | 5,2 | |
| FIGRA (w/s) | 23,6 | |
| propagation de la flamme (m) | 0,56 | |
| Gouttelettes enflammées | Aucune | d0 |
| SPR (m²/s) | 0,03 | s1 |
| Temps au pic SPR (s) | 876 | |
| TSP (m²) | 28,12 | |

Dans ce tableau, l'acronyme HRR correspond à l'expression anglophone « Heat Release Rate » qui renseigne sur le débit calorifique, l'acronyme THR correspond à l'expression anglophone « Total Heat Release » qui renseigne sur la quantité de chaleur dégagée lors de la combustion, l'acronyme FIGRA correspond à l'expression anglophone « Flre GRowth rAte » qui renseigne sur la vitesse de croissance du feu, l'acronyme SPR correspond à l'expression anglophone « Smoke Production Rate » qui renseigne sur la vitesse de production de fumée, et l'acronyme TSP correspond à l'expression anglophone « Total Smoke Production » qui renseigne sur la quantité totale de fumée produite.

Ces résultats démontrent que le câble conforme à l'invention présente les propriétés de protection au feu maximales au regard des exigences de la norme Européenne EN50399.

## Revendications

1. Procédé de fabrication d'un câble comprenant au moins un élément électriquement conducteur allongé et au moins une couche composite entourant ledit élément électriquement conducteur allongé, **caractérisé en ce qu'**il comprend au moins les étapes suivantes :
i) imprégner un matériau fibreux non tissé avec une composition géopolymère, afin de former un ruban imprégné de ladite composition géopolymère,
ii) sécher le ruban imprégné obtenu à l'étape i), afin de former un ruban imprégné séché, et
iii) appliquer le ruban imprégné séché obtenu à l'étape ii), autour d'un câble comprenant au moins un élément électriquement conducteur allongé, afin de former ladite couche composite entourant ledit élément électriquement conducteur allongé.

2. Procédé selon la revendication 1, **caractérisé en ce que** le matériau fibreux non tissé est choisi parmi les matériaux cellulosiques, les matériaux à base de polymères organiques synthétiques, les fibres de verre, et un de leurs mélanges.

3. Procédé selon la revendication 1 ou 2, **caractérisé en ce que** la composition géopolymère est une composition géopolymère aluminosilicate.

4. Procédé selon l'une quelconque des revendications précédentes, **caractérisé en ce que** l'étape i) est effectuée par enduction imprégnation.

5. Procédé selon l'une quelconque des revendications précédentes, **caractérisé en ce que** l'étape i) est mise en œuvre en faisant passer le matériau fibreux non tissé dans un dispositif d'enduction alimenté avec la composition géopolymère.

6. Procédé selon l'une quelconque des revendications précédentes, **caractérisé en ce que** l'étape ii) est effectuée à une température d'au plus 120°C.

7. Procédé selon l'une quelconque des revendications précédentes, **caractérisé en ce que** l'étape ii) est effectuée à une température d'au moins 50°C.

8. Procédé selon l'une quelconque des revendications précédentes, **caractérisé en ce que** l'étape iii) d'application du ruban imprégné séché autour d'un câble comprenant au moins un élément électriquement conducteur allongé est effectuée par enroulement du ruban imprégné séché autour du câble.

9. Procédé selon la revendication 8, **caractérisé en ce que** l'enroulement est longitudinal.

10. Procédé selon l'une quelconque des revendications précédentes, **caractérisé en ce que** l'étape iii) est mise en œuvre en faisant passer le ruban imprégné séché dans un dispositif de resserrement.

11. Procédé selon l'une quelconque des revendications précédentes, **caractérisé en ce qu'**il comprend en outre après l'étape iii), une étape iv) d'application d'une gaine externe de protection autour de la couche composite.

12. Procédé selon la revendication 11, **caractérisé en ce que** l'étape iv) est effectuée par extrusion.

13. Procédé selon l'une quelconque des revendications précédentes, **caractérisé en ce que** ledit procédé est un procédé continu.

14. Procédé selon la revendication 13, **caractérisé en ce que** le matériau fibreux non tissé est disposé sur un distributeur, et ledit matériau est distribué en continu pour mettre en œuvre au moins les étapes i) à iii).

15. Procédé selon la revendication 14, **caractérisé en ce que** l'étape i) est mise en œuvre en faisant passer le matériau fibreux non tissé dans un dispositif d'enduction alimenté avec la composition géopolymère avec un débit D (en kg/min), le distributeur délivre le matériau fibreux non tissé à une vitesse V (en km/min), et le rapport D/V va de 20 à 50 kg de composition géopolymère / km de matériau fibreux non tissé.

## Patentansprüche

1. Verfahren zur Herstellung eines Kabels, das mindestens ein längliches elektrisch leitendes Element und mindestens eine Schicht aus Verbundmaterial umfasst, die das längliche elektrisch leitende Element umgibt, **dadurch gekennzeichnet, dass** es mindestens die folgenden Schritte umfasst:
i) Imprägnieren eines Vliesfasermaterials mit einer Geopolymerzusammensetzung, um ein mit der Geopolymerzusammensetzung imprägniertes Band zu bilden,
ii) Trocken des in Schritt i) erhaltenen imprägnierten Bandes, um ein getrocknetes imprägniertes Band zu bilden, und
iii) Anbringen des in Schritt ii) erhaltenen getrockneten imprägnierten Bandes um ein Kabel, das mindestens ein längliches elektrisch leitendes Element umfasst, um die Schicht aus Verbundmaterial zu bilden, die das längliche elektrisch leitende Element umgibt.

2. Verfahren nach Anspruch 1, **dadurch gekennzeichnet, dass** das Vliesfasermaterial aus den Zellulosematerialien, den Materialien auf der Basis synthetischer organischer Polymere, den Glasfasern und einem von deren Gemischen ausgewählt ist.

3. Verfahren nach Anspruch 1 oder 2, **dadurch gekennzeichnet, dass** die Geopolymerzusammensetzung eine Aluminosilicat-Geopolymerzusammensetzung ist.

4. Verfahren nach einem der vorangehenden Ansprüche, **dadurch gekennzeichnet, dass** der Schritt i) durch Beschichtungsimprägnieren durchgeführt wird.

5. Verfahren nach einem der vorangehenden Ansprüche, **dadurch gekennzeichnet, dass** der Schritt i) durchgeführt wird, indem das Vliesfasermaterial in eine Beschichtungsvorrichtung eingeführt wird, die mit der Geopolymerzusammensetzung versorgt ist.

6. Verfahren nach einem der vorangehenden Ansprüche, **dadurch gekennzeichnet, dass** der Schritt ii) bei einer Temperatur von höchstens 120 °C durchgeführt wird.

7. Verfahren nach einem der vorangehenden Ansprüche, **dadurch gekennzeichnet, dass** der Schritt ii) bei einer Temperatur von mindestens 50 °C durchgeführt wird.

8. Verfahren nach einem der vorangehenden Ansprüche, **dadurch gekennzeichnet, dass** der Schritt iii) des Anbringens des getrockneten imprägnierten Bandes um ein Kabel, das mindestens ein längliches elektrisch leitendes Element umfasst, durch Wickeln des getrockneten imprägnierten Bandes um das Kabel durchgeführt wird.

9. Verfahren nach Anspruch 8, **dadurch gekennzeichnet, dass** das Wickeln längs erfolgt.

10. Verfahren nach einem der vorangehenden Ansprüche, **dadurch gekennzeichnet, dass** der Schritt iii) durchgeführt wird, indem das getrocknete imprägnierte Band in eine Straffungsvorrichtung eingeführt wird.

11. Verfahren nach einem der vorangehenden Ansprüche, **dadurch gekennzeichnet, dass** es ferner nach dem Schritt iii) einen Schritt iv) des Anbringens eines externen Schutzmantels um die Schicht aus Verbundmaterial umfasst.

12. Verfahren nach Anspruch 11, **dadurch gekennzeichnet, dass** der Schritt iv) durch Extrusion durchgeführt wird.

13. Verfahren nach einem der vorangehenden Ansprüche, **dadurch gekennzeichnet, dass** das Verfahren ein kontinuierliches Verfahren ist.

14. Verfahren nach Anspruch 13, **dadurch gekennzeichnet, dass** das Vliesfasermaterial auf einem Verteiler angeordnet ist und das Material kontinuierlich verteilt wird, um mindestens die Schritte i) bis iii) durchzuführen.

15. Verfahren nach Anspruch 14, **dadurch gekennzeichnet, dass** der Schritt i) durchgeführt wird, indem das Vliesfasermaterial in eine Beschichtungsvorrichtung eingeführt wird, die mit der Geopolymerzusammensetzung mit einem Durchsatz D (in kg/min) versorgt wird, wobei der Verteiler das Vliesfasermaterial in einer Geschwindigkeit V (in km/min) bereitstellt und das Verhältnis D/V von 20 bis 50 kg Geopolymerzusammensetzung / km Vliesfasermaterial reicht.

## Claims

1. A method for manufacturing a cable comprising at least one elongate electrically conductive element and at least one composite layer surrounding said elongate electrically conductive element, **characterized in that** it comprises at least the following steps:
i) impregnating a nonwoven fibrous material with a geopolymer composition, to form a tape impregnated with said geopolymer composition,
ii) drying the impregnated tape obtained at step i) to form a dried impregnated tape, and
iii) applying the dried impregnated tape obtained at step ii) around a cable comprising at least one elongate electrically conductive element, to form said composite layer surrounding said elongate electrically conductive element.

2. The method according to claim 1, **characterized in that** the nonwoven fibrous material is selected from among cellulose materials, synthetic organic polymer-based materials, glass fibres and one of the mixtures thereof.

3. The method according to claim 1 or 2, **characterized in that** the geopolymer composition is an aluminosilicate geopolymer composition.

4. The method according to any of the preceding claims, **characterized in that** step i) is implemented by impregnation coating.

5. The method according to any of the preceding claims, **characterized in that** step i) is implemented by passing the nonwoven fibrous material through a coating device fed with the geopolymer composition.

6. The method according to any of the preceding claims, **characterized in that** step ii) is conducted at a temperature of no more than 120 °C.

7. The method according to any of the preceding claims, **characterized in that** step ii) is conducted at a temperature of at least 50 °C,

8. The method according to any of the preceding claims, **characterized in that** step iii) to apply the dried impregnated tape around a cable comprising at least one elongate electrically conductive element is performed by winding the dried impregnated tape around the cable.

9. The method according to claim 8, **characterized in that** winding is longitudinal.

10. The method according to any of the preceding claims, **characterized in that** step iii) is implemented by passing the dried impregnated tape through a cinching device.

11. The method according to any of the preceding claims, **characterized in that** after step iii) it further comprises a step iv) to apply a protective outer sheath around the composite layer.

12. The method according to claim 11, **characterized in that** step iv) is performed by extrusion.

13. The method according to any of the preceding claims, **characterized in that** said method is a continuous method.

14. The method according to claim 13, **characterized in that** the nonwoven fibrous material is arranged on a dispenser, and said material is continuously dispensed to implement at least steps i) to iii).

15. The method according to claim 14, **characterized in that** step i) is implemented by passing the nonwoven fibrous material through a coating device fed with the geopolymer composition at a flow rate D (in kg/min), the dispenser delivers the nonwoven fibrous material at a velocity V (in km/min), and the ratio D/V ranges from 20 to 50 kg of geopolymer composition / km of nonwoven fibrous material.
